(19) Europäisches Patentamt
European Patent Office
Office européen des brevets

(11) **EP 4 458 997 A1**

(12) **EUROPEAN PATENT APPLICATION**
published in accordance with Art. 153(4) EPC

(43) Date of publication:
**06.11.2024 Bulletin 2024/45**

(21) Application number: **22915905.8**

(22) Date of filing: **22.12.2022**

(51) International Patent Classification (IPC):
*C22B 7/00* (2006.01)      *B01D 11/04* (2006.01)
*B01D 17/04* (2006.01)      *B01D 39/16* (2006.01)
*B01D 39/20* (2006.01)      *C22B 3/22* (2006.01)
*H01M 10/54* (2006.01)

(52) Cooperative Patent Classification (CPC):
**B01D 11/04; B01D 17/04; B01D 39/16;**
**B01D 39/20; C22B 3/22; C22B 7/00; H01M 10/54;**
Y02P 10/20; Y02W 30/84

(86) International application number:
**PCT/JP2022/047356**

(87) International publication number:
**WO 2023/127682 (06.07.2023 Gazette 2023/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **28.12.2021 JP 2021215009**

(71) Applicant: **Mitsui Chemicals Asahi Life Materials**
**Co., Ltd.**
**Tokyo 104-0028 (JP)**

(72) Inventors:
• **TANIGUCHI, Kohei**
**Tokyo 100-0006 (JP)**
• **TSURITANI, Kanoko**
**Tokyo 100-0006 (JP)**
• **UTSUMI, Takamitsu**
**Tokyo 100-0006 (JP)**
• **MIYAJI, Kiyoshi**
**Tokyo 100-0006 (JP)**
• **KUSAKABE, Junichi**
**Tokyo 100-0006 (JP)**

(74) Representative: **dompatent von Kreisler Selting**
**Werner -**
**Partnerschaft von Patent- und Rechtsanwälten**
**mbB**
**Deichmannhaus am Dom**
**Bahnhofsvorplatz 1**
**50667 Köln (DE)**

(54) **COALESCER FILTER USED IN SOLVENT EXTRACTION METHOD**

(57) The present disclosure provides a coalescer filter, which is used in a solvent extraction method for recovering metal contained in a secondary battery, wherein the coalescer filter includes a first filter medium and a second filter medium, an average pore diameter of the first filter medium is 0.8 $\mu$m or more and 8 $\mu$m or less, and an average pore diameter of the second filter medium is 9 $\mu$m or more and 100 $\mu$m or less.

**Description**

FIELD

The present invention relates to a coalescer filter, which is used in a solvent extraction method for recovering metal contained in a secondary battery.

BACKGROUND

The solvent extraction method is a common method for metal hydrometallurgy, comprising mixing an acidic aqueous solution containing metal ions with an extraction agent and/or diluent solvent specific to each metal, thereafter subjecting the mixed solution to coarse separation using a mixer settler (static separation) to obtain a metal ion extraction solution, thereafter mixing the extraction solution with another acidic aqueous solution having high acidity to back-extract the metal ions, and thereafter subjecting the mixed solution to coarse separation with the mixer settler to obtain a metal ion back-extraction solution and subjecting the coarsely-separated back-extraction solution to electrolysis or crystallization to thereby recover the metal (refer to, for example, Patent Literature 1 below).

However, when recovering specific metals (cobalt, nickel, etc.) from lithium-ion batteries, since the separation efficiency is insufficient and the purity of the recovered metal is unsatisfactory, there is a need for a method which provides stable and suitable separation efficiency. Furthermore, when recovering metal as a raw material for lithium-ion batteries rather than as an elemental metal, impurity concentrations are regulated to stabilize battery performance, and thus, it is important to increase the separation efficiency of the solvent extraction method.

Patent Literature 2 below discloses an oil/water separation device comprising a coalescer filter which can efficiently recover organic solvents used in a solvent extraction step. However, a coalescer filter with high separation efficiency (separation performance and productivity) which can efficiently recover specific metals from secondary batteries such as lithium-ion secondary batteries is not yet known.

[CITATION LIST]

[PATENT LITERATURE]

[PTL 1] Japanese Unexamined Patent Publication (Kokai) No. 2016-194105
[PTL 2] Japanese Unexamined Patent Publication (Kokai) No. 2014-124539

SUMMARY

[TECHNICAL PROBLEM]

In light of the prior art described above, an object of the present invention is to provide a coalescer filter with high separation efficiency (separation performance and productivity) which can be used in the solvent extraction method for recovering metal from a secondary battery.

[SOLUTION TO PROBLEM]

As a result of rigorous investigation and experimentation in order to achieve this object, the present inventors have unexpectedly discovered that a coalescer filter comprising two types of filter media having specific average pore diameters can perform oil-water separation with high efficiency in the solvent extraction method for recovering metal from a secondary battery, and have completed the present invention.

Specifically, the present invention is as described below.

[1] A coalescer filter, which is used in a solvent extraction method for recovering metal contained in a secondary battery, wherein

the coalescer filter comprises a first filter medium and a second filter medium,
an average pore diameter of the first filter medium is 0.8 $\mu$m or more and 8 $\mu$m or less, and
an average pore diameter of the second filter medium is 9 $\mu$m or more and 100 $\mu$m or less.

[2] The coalescer filter according to Item 1, wherein the second filter medium comprises:
a non-woven fabric having an average pore diameter of 9 $\mu$m or more and 50 $\mu$m or less, an average fiber diameter of 3 $\mu$m or more and 40 $\mu$m or less, a basis weight of 30 g/m$^2$ or more and 350 g/m$^2$ or less, and a porosity of 70% or more and less than 100%.

[3] The coalescer filter according to Item 2, wherein a surface tension of the non-woven fabric is 40 dyne/cm or more and 55 dyne/cm or less.

[4] The coalescer filter according to Item 1, wherein the second filter medium comprises a mesh.

[5] The coalescer filter according to Item 4, wherein the mesh has a surface tension of 35 dyne/cm or more and 55 dyne/cm or less.

[6] The coalescer filter according to any one of Items 1 to 5, wherein the first filter medium comprises a non-woven fabric having an average fiber diameter of 1 $\mu$m or more and 3 $\mu$m or less, a basis weight of 50 g/m$^2$ or more and 250 g/m$^2$ or less, a porosity of 60% or more and less than 100%, and a surface tension of 60 dyne/cm or more and 80 dyne/cm or less.

[7] The coalescer filter according to any one of Items 1 to 6, wherein the first filter medium comprises a non-woven fabric having an average fiber diameter of 1 $\mu$m or more and 3 $\mu$m or less, a basis weight of 150 g/m$^2$ or more and 200 g/m$^2$ or less, a porosity of 60% or more and less than 100%, and a surface tension of 35 dyne/cm or more and 55 dyne/cm or less.

[8] The coalescer filter according to any one of Items 1 to 7, wherein 90% by mass or more of the fiber component constituting the first filter medium and/or the second filter medium is one or more selected from the group consisting of polyester, polypropylene, polyethylene, and glass.

[9] A coalescer cartridge, comprising:

a body part having an internal flow path into which a metal ion extraction solution and/or back-extraction solution based on a mixed solution of an acidic aqueous solution and an extraction agent and/or a diluent organic solvent flows in a solvent extraction method for recovering metal from a secondary battery, and
a first filter medium and a second filter medium, which are arranged from a solution upstream side so as to surround the internal flow path in the body part, wherein
an average pore diameter of the first filter medium is 0.8 $\mu$m or more and 8 $\mu$m or less, and
an average pore diameter of the second filter medium is 9 $\mu$m or more and 100 $\mu$m or less.

[10] An oil/water separation method, for a metal ion extraction solution and/or back-extraction solution based on a mixed solution of an acidic aqueous solution and an extraction agent and/or a diluent organic solvent in a solvent extraction method for recovering metal from a secondary battery, the method comprising the steps of:

coarsely separating the extraction solution and/or back-extraction solution into an organic layer and an aqueous layer; and
treating the obtained coarsely separated organic layer and/or aqueous layer with the coalescer filter according to any one of Items 1 to 8.

[11] The oil/water separation method according to Item 10, wherein the coalescer filter is arranged such that the metal ion extraction solution and/or back-extraction solution flow from a first filter medium having a predetermined average pore diameter to a second filter medium having a greater average pore diameter than the first filter medium.

[12] The oil/water separation method according to Item 11, wherein the first filter medium comprises a non-woven fabric having an average fiber diameter of 1 $\mu$m or more and 3 $\mu$m or less, a basis weight of 50 g/m$^2$ or more and 250 g/m$^2$ or less, a porosity of 60% or more and less than 100%, and a surface tension of 60 dyne/cm or more and 80 dyne/cm or less, and
a primary component of the metal ion extraction solution and/or back-extraction solution used in the solvent extraction method is a component derived from an acidic aqueous solution.

[13] The oil/water separation method according to Item 11, wherein the first filter medium comprises a non-woven fabric having an average fiber diameter of 1 $\mu$m or more and 3 $\mu$m or less, a basis weight of 150 g/m$^2$ or more and 200 g/m$^2$ or less, a porosity of 60% or more and less than 100%, and a surface tension of 35 dyne/cm or more and 55 dyne/cm or less, and
a primary component of the metal ion extraction solution and/or back-extraction solution used in the solvent extraction method is a component derived from an extraction agent and/or a component derived from a diluent solvent.

[14] The oil/water separation method according to any one of Items 10 to 13, wherein the secondary battery is a lithium-ion secondary battery.

[ADVANTAGEOUS EFFECTS OF INVENTION]

The coalescer filter according to the present invention has excellent separation efficiency (separation performance and productivity) when used in a solvent extraction method for recovering metal from a secondary battery.

DESCRIPTION OF EMBODIMENTS

The embodiments of the present invention will be described in detail below.

The coalescer filter of the present embodiment is used in a solvent extraction method for recovering metal contained in a secondary battery, and the coalescer filter comprises a plurality of filter media having different average pore diameters. The plurality of filter media having different average pore diameters include a first filter medium (also referred to herein as "filter medium A") and a second filter medium (also referred to herein as "filter medium B").

The coalescer filter of the present embodiment can be used for the oil/water separation of the metal ion extraction solution and/or back-extraction solution based on a mixed solution of an acid aqueous solution and an extraction agent and/or a diluent solvent. The present inventors have focused, in relation to coalescer filters, on distinguishing between the function of capturing and coalescing microdroplets (free oil droplets finely dispersed in water, or free water droplets finely dispersed in oil) and the function of further promoting the coalescing of the captured microdroplets. Specifically, in the coalescer filter of the present embodiment, the filter medium A mainly has the function of capturing and coalescing microdroplets contained in the metal ion extraction solution and/or back-extraction solution, and the filter medium B mainly has the function of further promoting the coalescing of the microdroplets captured by the filter medium A. From the viewpoint of capturing and coalescing microdroplets, a relatively small average pore diameter is preferable, but from the viewpoint of further promoting the coalescing of microdroplets, a relatively large average pore diameter is preferable. The functions distinguished and focused on above have mutually opposing tendencies in the preferred average pore diameter, and different average pore diameters are required for filter medium A and filter medium B according to the functions distinguished and focused on above. According to the present embodiment, by combining a plurality of filter media having different average pore diameters, i.e., having different functions, it is possible to improve separation efficiency (separation performance and productivity).

The coalescer filter of the present embodiment can be used for the oil/water separation of the metal ion extraction solution and/or back-extraction solution based on a mixed solution of an acidic aqueous solution and an extraction agent and/or a diluent solvent. In a solvent extraction method for recovering metal from a secondary battery, in which the coalescer filter of the present embodiment can be used, first, a secondary battery is incinerated and crushed, and the resulting powder is treated with a mixed solution of an acidic aqueous solution and an extraction agent and/or a diluent solvent to obtain a metal ion extraction solution. Here, the "acidic aqueous solution" is not particularly limited and can be appropriately selected in accordance with the metal contained in the secondary battery, and examples thereof include aqueous solutions of sulfuric acid and hydrochloric acid.

Furthermore, the "extraction agent and/or diluent solvent" are not particularly limited, and can be appropriately selected in accordance with the metal contained in the secondary battery. For example, examples of the extraction agent include a 2-ethylhexylphosphonic acid mono-2-ethylhexyl ester extraction agent and an acidic phosphate extraction agent, and examples of the diluent solvent include an alkylbenzene diluent.

Examples of the method for recycling lithium-ion secondary batteries include a method in which used batteries are incinerated, crushed, and sorted, acid leaching is performed, and each metal is extracted and separated from the resulting leachate by solvent extraction. If the lithium-ion secondary battery to be acid leached contains not only the metal constituting the positive electrode, but also copper, iron, and aluminum, acid leaching also leaches copper, iron, and aluminum, reducing the quality of the target recoveries such as nickel and cobalt. Thus, when copper, iron, and aluminum are contained in the leachate obtained by acid leaching of a lithium-ion secondary battery, they must be removed.

A mixed metal aqueous solution obtained by the acid leaching is not particularly limited, and may typically be a leachate obtained by the acid leaching with sulfuric acid or the like of waste materials including lithium-ion secondary batteries, nickel-cadmium batteries, and nickel-plating waste liquid, containing positive electrode active materials. More specifically, the solution can be a leachate obtained by the acid leaching with sulfuric acid or the like of waste positive electrode active materials from positive electrode active material manufacturers, positive electrode active materials from battery manufacturers (in some cases, mixed with negative electrode active materials and solvent (PVDF or NMP)) that have been incinerated and dried, positive electrode substances in which positive electrode active materials are adhered to a current collector such as aluminum foil via a binder or positive electrode materials separated from the positive electrode substances, and positive electrode active materials separated through incinerating, crushing, and sieving batteries themselves, commonly referred to as battery sludges or battery crushing powder.

As used herein, the phrase "metal ion extraction solution" refers to an organic layer containing metal (cobalt, manganese, lithium, etc.) ions separated, which are obtained by mixing an acidic aqueous solution containing metal ions leached from the crushed waste lithium ion secondary battery with a mixed solution of an extraction agent and/or a diluent solvent to transfer the metal ions to an organic layer (mixed solution of an extraction agent and/or a diluent solvent) (generally referred to as extraction).

As used herein, the phrase "metal ion back-extraction solution" refers to an acidic aqueous solution containing metal (cobalt, manganese, lithium, etc.) ions separated, which are obtained by mixing the metal ion extraction solution described above with another acidic aqueous solution of high acidity to transfer the metal ions to the acidic solution (generally referred to as back-extraction).

The oil/water separation method of the present embodiment comprises a step of performing coarse separation as a preliminary step of separation using the coalescer filter. Though the coarse separation method is not particularly limited, static separation is preferred. For static separation, a mixer-settler, rotary disk column, or pulse column separation method can be used. The mixer-settler method is particularly preferable from the viewpoint of separation efficiency. Furthermore, the coarse separation need not be performed in one stage, but may be performed in a plurality of stages.

The oil/water separation method of the present embodiment is characterized by comprising a step of treating the organic layer and/or aqueous layer obtained after coarse separation with the coalescer filter. The coalescer filter coalesces and separates free water droplets that are finely dispersed in oil (organic solvent), or coalesces and separates free oil droplets that are finely dispersed in water.

The coalescer filter of the present embodiment is arranged in a casing in an oil-water separation device. In an aspect, the casing is constructed by assembling upper and lower halves, and in the assembled state, it is formed into a cylindrical shape extending vertically, and a closed space (internal space) is formed inside. In an aspect, the casing is provided with a partition wall that divides the internal space into upper and lower (upper internal space and lower internal space), an opening penetrating vertically is formed in this partition wall, and one end side of a vertical pipe extending to the upper internal space side is connected to this opening. Furthermore, in an aspect, a coalescer cartridge is arranged on the other end side of the vertical pipe, and the coalescer filter of the present embodiment is arranged inside this coalescer cartridge. One coalescer cartridge may be arranged in the casing, or a plurality of coalescer cartridges may be arranged therein.

In the oil/water separation method of the present embodiment, the metal ion extraction solution and/or back-extraction solution inflowing from the solution inflow port in the casing is guided through the opening and the vertical pipe to the coalescer cartridge, flows through the coalescer filter, and then flows out from the solution outlet in the casing.

The form of the coalescer filter is preferably a cartridge in order to increase the treatment flow rate. Such a cartridge comprises, for example, a body part having an internal flow path into which the metal ion extraction solution and/or back-extraction solution flows, and the filter medium A and the filter medium B arranged from the solution upstream side so as to surround the internal flow path in the body part. One end side of the body part is detachably connected to the vertical pipe in the casing, and the other end side of the body part is covered. The solution from the vertical pipe is guided to the internal flow path extending in the vertical direction of the body part, and then flows through the filter medium A and the filter medium B arranged so as to surround the internal flow path, during which oil-water separation is performed. The cartridge may comprise other members (filter media, reinforcing materials, etc.) upstream of the filter medium A, between the filter medium A and the filter medium B, and downstream of the filter medium B. In the cartridge, it is particularly preferable to form the filter medium A into a cylindrical pleated layer to increase the surface area. The number of stacked filter media A is not limited in any manner, but in practice, it is approximately 2 to 8 layers. The method of stacking is not limited in any manner, and for example, stacking, from the side where the solution flows into the coalescer filter, in the order of a non-woven fabric which serves as reinforcement and impurity removal, the filter medium A, and a mesh which serves as reinforcement and as a spacer, followed by pleating thereof, is preferable because the effects of increasing the pressure resistance of the coalescer filter, increasing the durability thereof against impurities, and suppressing a decrease in the effective area of the filter due to pleating can be simultaneously obtained. Furthermore, since the non-woven fabric which serves both as reinforcement and as impurity removal is also pleated, a large effective area can be obtained within one cartridge, whereby high durability can be obtained. The position of the filter medium B in the coalescer filter form is not particularly limited as long as it is arranged behind the filter medium A. Examples of the form thereof include forming a pleated layer together with the filter medium A, or wrapping one or more layers thereof around the outside of the pleated layer.

From the viewpoints of separation performance and productivity, the average pore diameter of the filter medium A is 0.8 $\mu$m or more and 8 $\mu$m or less, preferably 1 $\mu$m or more and 5 $\mu$m or less, and more preferably 2 $\mu$m or more and 3 $\mu$m or less. When the average pore diameter is less than 0.8 $\mu$m, the filter medium will quickly become clogged with foreign matter, whereby the life of the filter medium will decrease at an accelerated rate. In this case, it will be necessary to replace the coalescer filter more frequently, which will reduce productivity. When the average pore diameter is greater than 8 $\mu$m, droplets (water droplets or oil droplets) cannot be captured, resulting in poor separation performance.

When using the coalescer filter to separate oil droplets of an extraction agent and/or a diluent solvent present in the metal ion back-extraction solution, from the viewpoint of separation performance and productivity, the filter medium A is preferably a non-woven fabric having an average fiber diameter of 1 $\mu$m or more and 3 $\mu$m or less. In order to promote the coalescing of the captured oil droplets, the filter medium A is preferably a non-woven fabric having a basis weight of 50 g/m$^2$ or more and 250 g/m$^2$ or less, and more preferably 150 g/m$^2$ or more and 200 g/m$^2$ or less, and a porosity of 60% or more and less than 100%. For the same reason, the filter medium A is preferably a non-woven fabric having a surface tension of 60 dyne/cm or more and 80 dyne/cm or less. The basis weight of the filter medium A refers to the basis weight of a single layer when the filter medium A is a single-layer non-woven fabric, and refers to the basis weight of stacked non-woven fabrics when the filter medium A is a plurality of non-woven fabrics stacked.

In an aspect, the present embodiment is characterized in that the filter medium A comprises a non-woven fabric having an average fiber diameter of 1 μm or more and 3 μm or less, a basis weight of 50 g/m$^2$ or more and 250 g/m$^2$ or less, a porosity of 60% or more and less than 100%, and a surface tension of 60 dyne/cm or more and 80 dyne/cm or less, wherein a primary component of the metal ion extraction solution and/or back-extraction solution used in the solvent extraction method is a component derived from an acidic aqueous solution. The coalescer filter of this embodiment is suitable for use in a solvent extraction method in which the primary component is a component derived from an acidic aqueous solution. Note that "primary component" refers to a component contained in an amount of 70% by mass or more, 80% by mass or more, or 90% by mass or more relative to the total amount of the metal ion extraction solution and/or back-extraction solution.

When water droplets of an acidic aqueous solution present in a metal ion extraction solution are separated using the coalescer filter, the filter medium A is preferably a nonwoven fabric having an average fiber diameter of 1 μm or more and 3 μm or less from the viewpoints of separation performance and productivity. In order to promote the coalescing of the captured water droplets, the filter medium A is preferably a nonwoven fabric having a basis weight of 150 g/m$^2$ or more and 200 g/m$^2$ or less and a porosity of 60% or more and less than 100%. For the same reason, the filter medium A is preferably a nonwoven fabric having a surface tension of 35 dyne/cm or more and 55 dyne/cm or less.

In an aspect, the present embodiment is characterized in that the filter medium A comprises a non-woven fabric having an average fiber diameter of 1 μm or more and 3 μm or less, a basis weight of 150 g/m$^2$ or more and 200 g/m$^2$ or less, a porosity of 60% or more and less than 100%, and a surface tension of 35 dyne/cm or more and 55 dyne/cm or less, wherein a primary component of the metal ion extraction solution and/or back-extraction solution used in the solvent extraction method is a component derived from an extraction agent and/or a component derived from a diluent solvent. The coalescer filter of this embodiment is suitable for use in a solvent extraction method in which the primary component is a component which is derived from an extraction agent and/or a component which is derived from a diluent solvent. The meaning of "primary component" is the same as described above.

In order to further promote coalescing of the droplets coalesced by the filter medium A, the filter medium B has an average pore diameter of 9 μm or more and 100 μm or less. Though the filter medium B may be a non-woven fabric or a mesh, it is preferably a mesh from the viewpoint of maintaining separation efficiency at high flow rates. Since meshes have few film portions which are generated by calendering, the solution permeation is less likely to be inhibited, and since the pore size distribution thereof is uniform, the metal ion extraction solution and/or back-extraction solution can easily flow at a constant flow rate throughout the entire filter medium. Thus, when a mesh is used as the filter medium B, droplets (water droplets or oil droplets) tend to stay within the filter medium and tend to become coalesced even under conditions where the treatment flow rate is high. A mesh having a uniform pore size distribution allows pressure to be applied uniformly on the entire filter medium, making opening of the mesh unlikely, whereby it is easy to maintain separation efficiency even under conditions of high treatment flow rate. Note that as used herein, the term "mesh" refers to a structure woven from monofilaments (single fibers). When the filter medium B is a non-woven fabric, it is preferable that the average pore diameter thereof be 9 μm or more and 50 μm or less, the average fiber diameter thereof be 3 μm or more and 40 μm or less, the basis weight thereof be 30 g/m$^2$ or more and 350 g/m$^2$ or less, the porosity thereof be 70% or more, and the surface tension thereof be 35 dyne/cm or more and 55 dyne/cm or less. Furthermore, when the filter medium B is a mesh, it is preferable that the surface tension thereof be 35 dyne/cm or more and 55 dyne/cm or less.

Examples of the material of the filter medium A and the filter medium B include polyesters such as polyethylene terephthalate, polyethylene terephthalate adipate, polyethylene terephthalate isophthalate, polyethylene terephthalate sebacate, polyethylene terephthalate dodecanedioate, and polybutylene terephthalate, polypropylenes, polyethylenes, and glass fibers, which can be selected in accordance with the pH of the aqueous layer of the fluid and the chemical resistance of the organic layer. It is preferable that 90% by mass or more of the fiber component constituting the filter medium of the coalescer filter be one or more selected from polyethylene terephthalate, polypropylene, polyethylene, and glass. The materials of the filter medium A and the filter medium B may be the same or different.

Furthermore, from the viewpoint of enabling the filter medium A and the filter medium B to suitably exhibit their respective functions, the thickness of the filter medium A is preferably 0.2 mm or more and 2.00 mm or less, and the thickness of the filter medium B is preferably 0.2 mm or more and 3.0 mm or less. "Thickness" as used herein refers to the total thickness of the filter medium A or the filter medium B when a plurality of layers of the filter medium A or the filter medium B are stacked. The filter medium A may be thicker than the filter medium B, and in this case, it is easy to realize a filter medium A in which a plurality of layers of the filter medium A are stacked one on top of the other. Conversely, the filter medium B may be thicker than the filter medium A, and in this case, it is easy to realize the overall structure of a coalescer filter in which the filter medium B is wound around the outside of the filter medium A.

The method for producing the non-woven fabric is not limited in any manner, and examples thereof include melt-blowing, spun-bonding, spun-lacing, needle punching, and papermaking. Regarding the filter medium A, in order to make the average pore diameter thereof 0.8 μm or more and 8 μm or less, it is preferable to use mainly a non-woven fabric produced by melt-blowing.

The filter medium A and the filter medium B may be subjected to a surface treatment to make them hydrophilic, lipophilic or water-repellent. The method for making them hydrophilic is not limited in any manner, and examples thereof include methods such as introducing a hydrophilic functional group such as a hydroxyl group, a carboxyl group, an amino group, a ketone group, and a sulfone group into the fiber polymer via chemical reaction, or introducing a compound that becomes hydrophilic by alkali treatment such as acrylic acid through graft polymerization to the side chain. Examples thereof also include a method of hydrophilicially-treating the fiber surface with a hydrophilic processing agent such as polyalkylene oxides containing any of polyethylene glycol, polycarboxylic acids, polyisocyanates, vinyl groups, glycidyl ether groups, polyamines, and N-methoxymethylol, polymer electrolytes, or hydrophilic cellulose materials. Water repellent processing can be performed by a conventional method, and known water-repellent processing agent such as fluorocarbon resins such as perfluoroalcohol acrylate, silicone resins such as dimethyl silicone, paraffin resins, and wax resins may be applied to the fiber structure during the production of raw yarns or through the application of a method such as padding, dipping, spraying, or exhaustion.

Each of the filter medium A and the filter medium B may be used alone, or in order to increase strength or impart functionality, may be used in combination, and a reinforcing material may also be used. Examples of the reinforcing material include metal mesh, woven fabric, knitted fabric, and non-woven fabric. Further, the materials constituting these woven fabrics, knitted fabrics, and non-woven fabrics are not limited in any manner, and examples thereof include fibers of a polyester copolymer such as polyethylene terephthalate, polyethylene terephthalate adipate, polyethylene terephthalate isophthalate, polyethylene terephthalate sebacate, polyethylene terephthalate dodecanedioate, and polybutylene terephthalate, fibers of a polyamide such as polyhexamethylene adipamide (polyamide 66), polyhexamethylene sebacamide, polyhexamethylene decamide, polyhexamethylene hexamide, polycapramide (polyamide 6), polyoctamide, polynonamide, polydecamide, polydodecamide, and polytetramide, polyamide/imide fibers, aromatic polyamide fibers, fibers of a polyester ether such as polyparaoxybenzoate, fibers of a halogen-containing polymer such as polyvinyl chloride, polyvinylidene chloride, polyvinylidene fluoride, and polytetrafluoroethylene, fibers of a polyolefin such as polypropylene and polyethylene, various acrylic fibers, polyvinyl alcohol fibers, and natural fibers of regenerated cellulose, acetate, cotton, linen, silk, and wool.

It is also possible to carry out a treatment that further promotes oil-water separation by using the coalescer filter in multiple stages or by circulating the treatment solution through the coalescer filter. Furthermore, in order to collect impurities in the treatment solution, it is also possible to arrange a pre-filter for collecting impurities before treating the to-be-treated solution with the coalescer filter.

EXAMPLES

The present invention will be specifically described below using Examples and Comparative Examples.

First, the methods for measuring the physical properties used will be described below.

(1) Average Pore Diameter

Measurement is performed using a capillary flow porometer (model: CFP-1200AEX) manufactured by PMI after sufficiently degassing the sample using Galwick, manufactured by Porous Materials Inc., as the wetting liquid. The same sample is measured three times, and the average value of the average flow rate pore diameters obtained is defined as the average pore diameter of the sample.

(2) Average Fiber Diameter

The surface of the non-woven fabric is enlarged using a micrograph or an electron micrograph, the fiber diameter (thickness) thereof is actually measured at 50 points, and the average value thereof is determined.

(2) Basis Weight

The weight of a 100 mm × 100 mm sample is measured and converted to $g/m^2$.

(3) Porosity

Using a method compliant with the measurement method stipulated in JIS-L-1913-2010, the thickness under a 20 g/cm² load is measured at 5 locations using a measuring head: φ16mm, and the average value thereof is determined, and from the basis weight and thickness, the porosity is calculated by the following formula:

$$[1 - [\{(\text{basis weight} / 1000) / \text{specific gravity}\} / \text{thickness}]] \times 100$$

1.38 is used as the specific gravity of polyethylene terephthalate.

(4) Surface Tension

Nonporous films composed of the same materials as the fibers forming each filter medium are prepared as measurement samples. When the fiber surface is coated or chemically bonded with a processing agent of various types, nonporous films composed of the same materials as the fibers are prepared and treated under the same conditions as when the fiber surface is coated or chemically bonded with the same processing agent to thereby prepare measurement samples. The contact angles of the above samples are measured with liquids having various surface tensions, and the surface tension when the contact angle θ = 0 is determined by extrapolation and defined as the surface tension of each sample.

(5) Separation Performance

A sulfuric acid solution containing cobalt, which simulates a secondary battery extraction solution, and an organic layer consisting of a 2-ethylhexylphosphonic acid mono-2-ethylhexyl ester extraction agent and a naphthenic diluent are mixed in a beaker, and the mixture is allowed to stand for 10 minutes for coarse separation, and then only the aqueous layer and only the organic layer are each recovered, and these are used as simulated test solutions.

When using the recovered aqueous solution layer as a simulated test solution, 1 L of the simulated test solution is flowed through a coalescer filter (flat membrane, 12.5 cm²) at a reference flow rate (1 ml/min/cm²) with a small pump, and the TOC (total organic carbon) of the obtained aqueous solution layer is measured using a TOC meter to determine the concentration of the TOC remaining in the aqueous solution layer. Using the TOC concentration of the simulated test solution before the flowing of solution and the saturated oil concentration of the organic layer relative to water, the oil/water separation rate is calculated by the following formula:

[Math 1]

$$\text{Oil/water separation rate [\%]} = \left(1 - \frac{\text{TOC concentration of aqueous solution layer after separation [ppm]} - \text{saturated TOC concentration [ppm]}}{\text{TOC concentration of aqueous solution layer before separation [ppm]} - \text{saturated TOC concentration [ppm]}}\right) \times 100$$

When using the recovered organic layer as a simulated test solution, 1 L of the simulated test solution is flowed through a coalescer filter (flat membrane type, 12.5 cm²) using a small pump at a reference flow rate (1 ml/min/cm²) and at a flow rate of 1.5-fold, 3-fold, and 10-fold the reference flow rate, the moisture concentration of the obtained organic layer is measured using a Karl Fischer moisture meter to determine and concentration of the moisture remaining in the organic layer is determined. Using the moisture concentration of the simulated test solution before the flowing of solution and the saturated moisture concentration relative to the organic layer, the oil/water separation rate is calculated by the following formula:

[Math 2]

$$\text{Oil/water separation rate [\%]} = \left(1 - \frac{\text{moisture concentration of organic layer after separation [ppm]} - \text{saturated moisture concentration [ppm]}}{\text{moisture concentration of organic layer before separation [ppm]} - \text{saturated moisture concentration [ppm]}}\right) \times 100$$

In oil/water separation, it has been found that a separation flow rate (separation speed) of 1 ml/min/cm² is appropriate for finely dispersed droplets of 20 μm or less, and this separation flow rate is used as the reference flow rate.

(6) Coalesced Droplet Diameter

In the reference flow rate test described in (5) above, a photograph of the droplet in the simulated test solution after being flowed through the filter is captured, the droplet diameter is actually measured at 10 points, and the average value thereof is determined.

(7) Productivity

In the test of (5) above, the productivity is evaluated as follows.
Excellent: the oil-water separation rate does not decrease by 1% or more even when the flow rate is increased to 3-fold the reference flow rate.
Average: the oil-water separation rate does not decrease by 1% or more even when the flow rate is increased to 1.5-fold the reference flow rate.
Poor: the oil-water separation rate decreases by 1% or more when the flow rate is increased to 1.5-fold the reference flow rate.

[Preparation of Coalescer Filter]

As the filter medium A, a plurality of layers thereof are stacked and folded into a pleated shape to form a cylindrical shape. By wrapping the filter medium B once around the outside of such filter medium A, a coalescer filter was produced. Hereinafter, such a configuration is omitted in Examples and Comparative Examples that do not have the filter medium A and/or filter medium B, and thereby a coalescer filter is produced in the same manner. The coalescer filter was found to be capable of producing a coalescer cartridge by a conventional method.

[Example 1]

A simulated test solution consisting of an aqueous solution layer was treated with a filter consisting of the filter medium A, which was a polyester non-woven fabric having an average pore diameter of 1 $\mu$m, an average fiber diameter of 1.1 $\mu$m, a basis weight of 160 g/m$^2$, a porosity of 67%, and a surface tension of 70 dyne/cm, obtained by stacking four layers of filter medium (the basis weight of 160 g/m$^2$ provided by the stacked four layers each having a basis weight of 40 g/m$^2$), which had been treated with a polyester SR processing agent to impart hydrophilicity, and the filter medium B, which was a polyester non-woven fabric having an average pore diameter of 38 $\mu$m, an average fiber diameter of 30 $\mu$m, a basis weight of 315 g/m$^2$, a porosity of 86%, and a surface tension of 44 dyne/cm. The results are shown in Table 1 below.

[Example 2]

A simulated test solution consisting of an aqueous solution layer was treated with a filter consisting of the filter medium A, which was a polyester non-woven fabric having an average pore diameter of 1 $\mu$m, an average fiber diameter of 1.1 $\mu$m, a basis weight of 160 g/m$^2$, a porosity of 67%, and a surface tension of 70 dyne/cm, obtained by stacking four layers of filter medium, which had been treated with a polyester SR processing agent to impart hydrophilicity, and the filter medium B, which was a polyester non-woven fabric having an average pore diameter of 40 $\mu$m, an average fiber diameter of 20 $\mu$m, a basis weight of 50 g/m$^2$, a porosity of 81%, and a surface tension of 44 dyne/cm. The results are shown in Table 1 below.

[Example 3]

A simulated test solution consisting of an aqueous solution layer was treated with a filter consisting of the filter medium A, which was a polyester non-woven fabric having an average pore diameter of 1 $\mu$m, an average fiber diameter of 1.1 $\mu$m, a basis weight of 160 g/m$^2$, a porosity of 67%, and a surface tension of 70 dyne/cm, obtained by stacking four layers of filter medium, which had been treated with a polyester SR processing agent to impart hydrophilicity, and the filter medium B, which was a polyester non-woven fabric having an average pore diameter of 9 $\mu$m, an average fiber diameter of 4 $\mu$m, a basis weight of 260 g/m$^2$, a porosity of 72%, and a surface tension of 44 dyne/cm. The results are shown in Table 1 below.

[Example 4]

A simulated test solution consisting of an aqueous solution layer was treated with a filter consisting of the filter medium A, which was a polyester non-woven fabric having an average pore diameter of 5 $\mu$m, an average fiber diameter of 2.3 $\mu$m, a basis weight of 180 g/m$^2$, a porosity of 78%, and a surface tension of 70 dyne/cm, obtained by stacking two layers of filter medium, which had been treated with a polyester SR processing agent to impart hydrophilicity, and the filter medium B, which was a polyester non-woven fabric having an average pore diameter of 38 $\mu$m, an average

fiber diameter of 30 μm, a basis weight of 315 g/m², a porosity of 86%, and a surface tension of 44 dyne/cm. The results are shown in Table 1 below.

[Example 5]

A simulated test solution consisting of an aqueous solution layer was treated with a filter consisting of the filter medium A, a polyester non-woven fabric having an average pore diameter of 1 μm, an average fiber diameter of 1.1 μm, a basis weight of 160 g/m², a porosity of 67%, and a surface tension of 70 dyne/cm, obtained by stacking four layers of filter medium, which had been treated with a polyester SR processing agent to impart hydrophilicity, and the filter medium B, which was a polyester non-woven fabric having an average pore diameter of 90 μm, an average fiber diameter of 50 μm, a basis weight of 100 g/m², a porosity of 25%, and a surface tension of 44 dyne/cm. The results are shown in Table 1 below.

[Example 6]

A simulated test solution consisting of an organic layer was treated with a filter consisting of the filter medium A, a polyester non-woven fabric having an average pore diameter of 2 μm, an average fiber diameter of 1.7 μm, a basis weight of 160 g/m², a porosity of 62%, and a surface tension of 44 dyne/cm, obtained by stacking two layers of filter medium, and the filter medium B, which was a polyester non-woven fabric having an average pore diameter of 38 μm, an average fiber diameter of 30 μm, a basis weight of 315 g/m², a porosity of 86%, and a surface tension of 44 dyne/cm. The results are shown in Table 2 below.

[Example 7]

A simulated test solution consisting of an organic layer was treated with a filter consisting of the filter medium A, which was a polyester non-woven fabric having an average pore diameter of 2 μm, an average fiber diameter of 1.7 μm, a basis weight of 160 g/m², a porosity of 62%, and a surface tension of 44 dyne/cm, obtained by stacking two layers of filter medium, and the filter medium B, which was a polyester non-woven fabric having an average pore diameter of 40 μm, an average fiber diameter of 20 μm, a basis weight of 50 g/m², a porosity of 81%, and a surface tension of 44 dyne/cm. The results are shown in Table 2 below.

[Example 8]

A simulated test solution consisting of an organic layer was treated with a filter consisting of the filter medium A, which was a polyester non-woven fabric having an average pore diameter of 2 μm, an average fiber diameter of 1.7 μm, a basis weight of 160 g/m², a porosity of 62%, and a surface tension of 44 dyne/cm, obtained by stacking two layers of filter medium, and the filter medium B, which was a polyester non-woven fabric having an average pore diameter of 9 μm, an average fiber diameter of 4 μm, a basis weight of 260 g/m², a porosity of 72%, and a surface tension of 44 dyne/cm. The results are shown in Table 2 below.

[Example 9]

A simulated test solution consisting of an organic layer was treated with a filter consisting of the filter medium A, which was a polyester non-woven fabric having an average pore diameter of 5 μm, an average fiber diameter of 2.3 μm, a basis weight of 180 g/m², a porosity of 79%, and a surface tension of 44 dyne/cm, obtained by stacking two layers of filter medium, and the filter medium B, which was a polyester non-woven fabric having an average pore diameter of 38 μm, an average fiber diameter of 30 μm, a basis weight of 315 g/m², a porosity of 86%, and a surface tension of 44 dyne/cm. The results are shown in Table 2 below.

[Example 10]

A simulated test solution consisting of an organic layer was treated with a filter consisting of the filter medium A, which was a polyester non-woven fabric having an average pore diameter of 2 μm, an average fiber diameter of 1.7 μm, a basis weight of 160 g/m², a porosity of 62%, and a surface tension of 44 dyne/cm, obtained by stacking two layers of filter medium, and the filter medium B, which was a polyester non-woven fabric having an average pore diameter of 90 μm, an average fiber diameter of 50 μm, a basis weight of 100 g/m², a porosity of 25%, and a surface tension of 44 dyne/cm. The results are shown in Table 2 below.

[Comparative Example 1]

A simulated test solution consisting of an aqueous solution layer was treated by allowing it to stand for 30 minutes without using a coalescer filter. The results are shown in Table 1 below.

[Comparative Example 2]

A simulated test solution consisting of an aqueous solution layer was treated with a filter consisting of the filter medium A, which was a polyester non-woven fabric having an average pore diameter of 1 $\mu$m, an average fiber diameter of 1.1 $\mu$m, a basis weight of 160 g/m$^2$, a porosity of 67%, and a surface tension of 70 dyne/cm, obtained by stacking four layers of filter medium, which had been treated with a polyester SR processing agent to impart hydrophilicity, and including no filter medium B. The results are shown in Table 1 below.

[Comparative Example 3]

A simulated test solution consisting of an aqueous solution layer was treated with a filter including no filter medium A and consisting of the filter medium B, which was a polyester nonwoven fabric having an average pore diameter of 38 $\mu$m, an average fiber diameter of 30 $\mu$m, a basis weight of 315 g/m$^2$, a porosity of 86%, and a surface tension of 44 dyne/cm. The results are shown in Table 1 below.

[Comparative Example 4]

A simulated test solution consisting of an aqueous solution layer was treated with a filter consisting of the filter medium A, which was a polyester non-woven fabric having an average pore diameter of 0.5 $\mu$m, an average fiber diameter of 0.8 $\mu$m, a basis weight of 180 g/m$^2$, a porosity of 60%, and a surface tension of 44 dyne/cm, obtained by stacking three layers of filter medium, and the filter medium B, which was a polyester non-woven fabric having an average pore diameter of 38 $\mu$m, an average fiber diameter of 30 $\mu$m, a basis weight of 315 g/m$^2$, a porosity of 86%, and a surface tension of 44 dyne/cm. The results are shown in Table 1 below.

[Comparative Example 5]

A simulated test solution consisting of an aqueous solution layer was treated with a filter consisting of the filter medium A, which was a polyester non-woven fabric having an average pore diameter of 40 $\mu$m, an average fiber diameter of 20 $\mu$m, a basis weight of 50 g/m$^2$, a porosity of 81%, and a surface tension of 44 dyne/cm, and the filter medium B, which was a polyester nonwoven fabric having an average pore diameter of 38 $\mu$m, an average fiber diameter of 30 $\mu$m, a basis weight of 315 g/m$^2$, a porosity of 86%, and a surface tension of 44 dyne/cm. The results are shown in Table 1 below.

[Comparative Example 6]

A simulated test solution consisting of an aqueous solution layer was treated with a filter consisting of the filter medium A, which was a polyester non-woven fabric having an average pore diameter of 1 $\mu$m, an average fiber diameter of 1.1 $\mu$m, a basis weight of 160 g/m$^2$, a porosity of 67%, and a surface tension of 44 dyne/cm, obtained by stacking four layers of filter medium, and the filter medium B, which was a polyester non-woven fabric having an average pore diameter of 7 $\mu$m, an average fiber diameter of 2.3 $\mu$m, a basis weight of 90 g/m$^2$, a porosity of 78%, and a surface tension of 44 dyne/cm. The results are shown in Table 2 below.

[Comparative Example 7]

A simulated test solution consisting of an organic layer was treated by allowing it to stand for 30 minutes without using a coalescer filter. The results are shown in Table 2 below.

[Comparative Example 8]

A simulated test solution consisting of an organic layer was treated with a filter consisting of the filter medium A, which was a polyester non-woven fabric having an average pore diameter of 2 $\mu$m, an average fiber diameter of 1.7 $\mu$m, a basis weight of 160 g/m$^2$, a porosity of 62%, and a surface tension of 44 dyne/cm, obtained by stacking two layers of filter medium, and including no filter medium B. The results are shown in Table 2 below.

[Comparative Example 9]

A simulated test solution consisting of an organic layer was treated with a filter including no filter medium A and consisting of the filter medium B, which was a polyester non-woven fabric having an average pore diameter of 38 $\mu$m, an average fiber diameter of 30 $\mu$m, a basis weight of 315 g/m$^2$, a porosity of 86%, and a surface tension of 44 dyne/cm. The results are shown in Table 2 below.

[Comparative Example 10]

A simulated test solution consisting of an organic layer was treated with a filter consisting of the filter medium A, which was a polyester non-woven fabric having an average pore diameter of 0.5 $\mu$m, an average fiber diameter of 0.8 $\mu$m, a basis weight of 180 g/m$^2$, a porosity of 82%, and a surface tension of 44 dyne/cm, obtained by stacking three layers of filter medium, and the filter medium B, which was a polyester non-woven fabric having an average pore diameter of 38 $\mu$m, an average fiber diameter of 30 $\mu$m, a basis weight of 315 g/m$^2$, a porosity of 60%, and a surface tension of 44 dyne/cm. The results are shown in Table 2 below.

[Comparative Example 11]

A simulated test solution consisting of an organic layer was treated with a filter consisting of the filter medium A, which was a polyester non-woven fabric having an average pore diameter of 40 $\mu$m, an average fiber diameter of 20 $\mu$m, a basis weight of 50 g/m$^2$, a porosity of 81%, and a surface tension of 44 dyne/cm, and the filter medium B, which was a polyester non-woven fabric having an average pore diameter of 38 $\mu$m, an average fiber diameter of 30 $\mu$m, a basis weight of 315 g/m$^2$, a porosity of 86%, and a surface tension of 44 dyne/cm. The results are shown in Table 2 below.

[Comparative Example 12]

A simulated test solution consisting of an organic layer was treated with a filter consisting of the filter medium A, which was a polyester non-woven fabric having an average pore diameter of 2 $\mu$m, an average fiber diameter of 1.7 $\mu$m, a basis weight of 160 g/m$^2$, a porosity of 62%, and a surface tension of 44 dyne/cm, obtained by stacking two layers of filter medium, and the filter medium B, which was a polyester non-woven fabric having an average pore diameter of 7 $\mu$m, an average fiber diameter of 2.3 $\mu$m, a basis weight of 90 g/m$^2$, a porosity of 78%, and a surface tension of 44 dyne/cm. The results are shown in Table 2 below.

[Table 1]

| | Coalescer filter | | | | | | | | | | | | | | Effects | | | | | |
| | Filter medium A | | | | | | | Filter medium B | | | | | | | Coalesced droplet diameter [mm] | Productivity | Oil/water separation rate [%] | | | |
| | Form | Avg pore diameter μm | Avg fiber diameter μm | Basis weight g/m² | Porosity % | Surface tension dyne/cm | Material | Form | Avg pore diameter μm | Avg fiber diameter μm | Basis weight g/m² | Porosity % | Surface tension dyne/cm | Material | | | 1-fold treatment flow rate | 1.5-fold treatment flow rate | 3-fold treatment flow rate | 10-fold treatment flow rate |
|---|---|---|---|---|---|---|---|---|---|---|---|---|---|---|---|---|---|---|---|---|
| Ex 1 | Non-woven fabric | 1 | 1.1 | 160 | 67 | 70 | PET | Non-woven fabric | 38 | 30 | 315 | 86 | 44 | PET | 3 | Exc | 99.8 | 99.6 | 99.2 | 92.9 |
| Ex 2 | Non-woven fabric | 1 | 1.1 | 160 | 67 | 70 | PET | Non-woven fabric | 40 | 20 | 50 | 81 | 44 | PET | 3 | Exc | 99.6 | 99.5 | 99.1 | 92.5 |
| Ex 3 | Non-woven fabric | 1 | 1.1 | 160 | 67 | 70 | PET | Non-woven fabric | 9 | 4 | 260 | 72 | 44 | PET | 3 | Exc | 99.5 | 99.2 | 98.9 | 91.9 |
| Ex 4 | Non-woven fabric | 5 | 2.3 | 180 | 78 | 70 | PET | Non-woven fabric | 38 | 30 | 315 | 86 | 44 | PET | 3 | Exc | 99.8 | 99.5 | 99.0 | 93.1 |
| Ex 5 | Non-woven fabric | 1 | 1.1 | 160 | 67 | 70 | PET | Mesh | 90 | 50 | 100 | 25 | 44 | PET | 3 | Exc | 99.5 | 99.4 | 99.0 | 96.1 |
| Comp Ex 1 | N/A | | | | | | | N/A | | | | | | | <0.1 | Poor | 93.8 | - | - | - |
| Comp Ex 2 | Non-woven fabric | 1 | 1.1 | 160 | 67 | 70 | PET | N/A | | | | | | | 0.3 | Avg | 98.3 | 97.8 | 97.1 | 90.2 |
| Comp Ex 3 | N/A | | | | | | | Non-woven fabric | 38 | 30 | 315 | 86 | 44 | PET | <0.1 | Poor | 94.8 | 93.5 | 92.0 | 81.0 |
| Comp Ex 4 | Non-woven fabric | 0.5 | 0.8 | 180 | 60 | 44 | PET | Non-woven fabric | 38 | 30 | 315 | 86 | 44 | PET | 2.5 | Poor | 98.8 | 97.5 | 96.4 | 91.1 |
| Comp Ex 5 | Non-woven fabric | 40 | 20 | 50 | 81 | 44 | PET | Non-woven fabric | 38 | 30 | 315 | 86 | 44 | PET | <0.1 | Poor | 73.8 | 71.2 | 68.8 | 65.5 |
| Comp Ex 6 | Non-woven fabric | 1 | 1.1 | 160 | 67 | 44 | PET | Non-woven fabric | 7 | 2.3 | 90 | 78 | 44 | PET | 0.5 | Avg | 99.0 | 98.4 | 97.7 | 91.3 |

[Table 2]

| | | Coalescer filter | | | | | | | | | | | | | | Effects | | | | | |
|---|---|---|---|---|---|---|---|---|---|---|---|---|---|---|---|---|---|---|---|---|---|---|
| | | Filter medium A | | | | | | | Filter medium B | | | | | | | Coalesced droplet diameter [mm] | Productivity | Oil/water separation rate [%] | | | |
| | Form | Avg pore diameter μm | Avg fiber diameter μm | Basis weight g/ m² | Porosity % | Surface tension dyne/cm | Material | Form | Avg pore diameter μm | Avg fiber diameter μm | Basis weight g/ m² | Porosity % | Surface tension dyne/cm | Material | | | 1-fold treatment flow rate | 1.5-fold treatment flow rate | 3-fold treatment flow rate | 10-fold treatment flow rate |
| Ex 6 | Non-woven fabric | 2 | 1.7 | 160 | 62 | 44 | PET | Non-woven fabric | 38 | 30 | 315 | 86 | 44 | PET | 5 | Exc | 98.2 | 98.0 | 97.5 | 93.8 |
| Ex 7 | Non-woven fabric | 2 | 1.7 | 160 | 62 | 44 | PET | Non-woven fabric | 40 | 20 | 50 | 81 | 44 | PET | 5 | Exc | 98.2 | 97.9 | 97.4 | 93.1 |
| Ex 8 | Non-woven fabric | 2 | 1.7 | 160 | 62 | 44 | PET | Non-woven fabric | 9 | 4 | 260 | 72 | 44 | PET | 5 | Exc | 98.2 | 97.5 | 97.1 | 92.3 |
| Ex 9 | Non-woven fabric | 5 | 2.3 | 180 | 79 | 44 | PET | Non-woven fabric | 38 | 30 | 315 | 86 | 44 | PET | 5 | Exc | 98.2 | 97.6 | 97.1 | 93.1 |
| Ex 10 | Non-woven fabric | 2 | 1.7 | 160 | 62 | 44 | PET | Mesh | 90 | 50 | 100 | 25 | 44 | PET | 5 | Exc | 98.2 | 98.0 | 97.7 | 96.2 |
| Comp Ex 7 | N/A | | | | | | | N/A | | | | | | | <0.1 | Poor | 83.6 | - | - | - |
| Comp Ex 8 | Non-woven fabric | 2 | 1.7 | 160 | 62 | 44 | PET | N/A | | | | | | | 1 | Avg | 94.5 | 93.9 | 93.2 | 91.5 |
| Comp Ex 9 | N/A | | | | | | | Non-woven fabric | 38 | 30 | 315 | 86 | 44 | PET | <0.1 | Poor | 70.9 | 69.1 | 67.3 | 61.0 |
| Comp Ex 10 | Non-woven fabric | 0.5 | 0.8 | 180 | 60 | 44 | PET | Non-woven fabric | 38 | 30 | 315 | 86 | 44 | PET | 5 | Poor | 93.6 | 92.2 | 90.9 | 88.5 |
| Comp Ex 11 | Non-woven fabric | 40 | 20 | 50 | 81 | 44 | PET | Non-woven fabric | 38 | 30 | 315 | 86 | 44 | PET | <0.1 | Poor | 89.1 | 87.6 | 85.9 | 80.3 |
| Comp Ex 12 | Non-woven fabric | 2 | 1.7 | 160 | 62 | 44 | PET | Non-woven fabric | 7 | 2.3 | 90 | 78 | 44 | PET | 0.5 | Avg | 97.3 | 96.5 | 95.3 | 92.4 |

INDUSTRIAL APPLICABILITY

According to the present invention, since it is possible to separate specific useful metals from secondary batteries such as lithium-ion secondary batteries, nickel-metal hydride secondary batteries, and nickel-cadmium secondary batteries with high efficiency, the present invention is industrially useful.

**Claims**

1.  A coalescer filter, which is used in a solvent extraction method for recovering metal contained in a secondary battery, wherein

    the coalescer filter comprises a first filter medium and a second filter medium,
    an average pore diameter of the first filter medium is 0.8 $\mu$m or more and 8 $\mu$m or less, and
    an average pore diameter of the second filter medium is 9 $\mu$m or more and 100 $\mu$m or less.

2.  The coalescer filter according to claim 1, wherein the second filter medium comprises:
    a non-woven fabric having an average pore diameter of 9 $\mu$m or more and 50 $\mu$m or less, an average fiber diameter of 3 $\mu$m or more and 40 $\mu$m or less, a basis weight of 30 g/m$^2$ or more and 350 g/m$^2$ or less, a porosity of 70% or more and less than 100%, and a surface tension of 40 dyne/cm or more and 55 dyne/cm or less.

3.  The coalescer filter according to claim 2, wherein the surface tension of the non-woven fabric is 40 dyne/cm or more and 55 dyne/cm or less.

4.  The coalescer filter according to claim 1, wherein the second filter medium comprises a mesh.

5.  The coalescer filter according to claim 4, wherein the mesh has a surface tension of 35 dyne/cm or more and 55 dyne/cm or less.

6.  The coalescer filter according to any one of claims 1 to 5, wherein the first filter medium comprises a non-woven fabric having an average fiber diameter of 1 $\mu$m or more and 3 $\mu$m or less, a basis weight of 50 g/m$^2$ or more and 250 g/m$^2$ or less, a porosity of 60% or more and less than 100%, and a surface tension of 60 dyne/cm or more and 80 dyne/cm or less.

7.  The coalescer filter according to any one of claims 1 to 5, wherein the first filter medium comprises a non-woven fabric having an average fiber diameter of 1 $\mu$m or more and 3 $\mu$m or less, a basis weight of 150 g/m$^2$ or more and 200 g/m$^2$ or less, a porosity of 60% or more and less than 100%, and a surface tension of 35 dyne/cm or more and 55 dyne/cm or less.

8.  The coalescer filter according to any one of claims 1 to 5, wherein 90% by mass or more of the fiber component constituting the first filter medium and/or the second filter medium is one or more selected from the group consisting of polyester, polypropylene, polyethylene, and glass.

9.  A coalescer cartridge, comprising:

    a body part having an internal flow path into which a metal ion extraction solution and/or back-extraction solution based on a mixed solution of an acidic aqueous solution and an extraction agent and/or a diluent organic solvent flows in a solvent extraction method for recovering metal from a secondary battery, and
    a first filter medium and a second filter medium, which are arranged from a solution upstream side so as to surround the internal flow path in the body part, wherein
    an average pore diameter of the first filter medium is 0.8 $\mu$m or more and 8 $\mu$m or less, and
    an average pore diameter of the second filter medium is 9 $\mu$m or more and 100 $\mu$m or less.

10. An oil/water separation method, for a metal ion extraction solution and/or back-extraction solution based on a mixed solution of an acidic aqueous solution and an extraction agent and/or a diluent organic solvent in a solvent extraction method for recovering metal from a secondary battery, the method comprising the steps of:

    coarsely separating the extraction solution and/or back-extraction solution into an organic layer and an aqueous layer; and
treating the obtained coarsely separated organic layer and/or aqueous layer with the coalescer filter according to any one of claims 1 to 5.

11. The oil/water separation method according to claim 10, wherein the coalescer filter is arranged such that the metal ion extraction solution and/or back-extraction solution flow from a first filter medium having a predetermined average pore diameter to a second filter medium having a greater average pore diameter than the first filter medium.

12. The oil/water separation method according to claim 11, wherein the first filter medium comprises a non-woven fabric having an average fiber diameter of 1 $\mu$m or more and 3 $\mu$m or less, a basis weight of 50 g/m$^2$ or more and 250 g/m$^2$ or less, a porosity of 60% or more and less than 100%, and a surface tension of 60 dyne/cm or more and 80 dyne/cm or less, and
a primary component of the metal ion extraction solution and/or back-extraction solution used in the solvent extraction method is a component derived from an acidic aqueous solution.

13. The oil/water separation method according to claim 11, wherein the first filter medium comprises a non-woven fabric having an average fiber diameter of 1 $\mu$m or more and 3 $\mu$m or less, a basis weight of 150 g/m$^2$ or more and 200 g/m$^2$ or less, a porosity of 60% or more and less than 100%, and a surface tension of 35 dyne/cm or more and 55 dyne/cm or less, and
a primary component of the metal ion extraction solution and/or back-extraction solution used in the solvent extraction method is a component derived from an extraction agent and/or a component derived from a diluent solvent.

14. The oil/water separation method according to claim 10, wherein the secondary battery is a lithium-ion secondary battery.

**EP 4 458 997 A1**

## INTERNATIONAL SEARCH REPORT

| International application No. |
|---|
| **PCT/JP2022/047356** |

| A. | CLASSIFICATION OF SUBJECT MATTER |
|---|---|

*C22B 7/00*(2006.01)i; *B01D 11/04*(2006.01)i; *B01D 17/04*(2006.01)i; *B01D 39/16*(2006.01)i; *B01D 39/20*(2006.01)i; *C22B 3/22*(2006.01)i; *H01M 10/54*(2006.01)i
FI: C22B7/00 C; B01D11/04 Z; B01D17/04 501D; B01D39/16 A; B01D39/20 B; C22B3/22; H01M10/54

According to International Patent Classification (IPC) or to both national classification and IPC

| B. | FIELDS SEARCHED |
|---|---|

Minimum documentation searched (classification system followed by classification symbols)

C22B7/00; B01D11/04; B01D17/04; B01D39/16; B01D39/20; C22B3/22; H01M10/54

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 09-225204 A (KURITA WATER IND LTD) 02 September 1997 (1997-09-02) paragraph [0027] | 1, 8 |
| Y | | 2-8 |
| A | | 9-14 |
| X | JP 2010-229351 A (NIPPON SHOKUBAI CO LTD) 14 October 2010 (2010-10-14) paragraphs [0059]-[0062], [0096]-[0104], [0113], fig. 1 | 1, 8 |
| Y | | 2-8 |
| A | | 9-14 |
| Y | JP 63-156508 A (ASAHI CHEM IND CO LTD) 29 June 1988 (1988-06-29) p. 1, lower left column to p. 3, upper right column | 2-8 |
| Y | JP 53-090065 A (SOMAR MFG) 08 August 1978 (1978-08-08) pp. 1-2 | 2-8 |
| Y | JP 2004-057861 A (ASAHI KASEI FIBERS CORP) 26 February 2004 (2004-02-26) paragraphs [0009], [0012] | 2-8 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 March 2023** | **14 March 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

18

**INTERNATIONAL SEARCH REPORT**
Information on patent family members

International application No.

**PCT/JP2022/047356**

| Patent document cited in search report | | | Publication date (day/month/year) | Patent family member(s) | Publication date (day/month/year) |
|---|---|---|---|---|---|
| JP | 09-225204 | A | 02 September 1997 | (Family: none) | |
| JP | 2010-229351 | A | 14 October 2010 | (Family: none) | |
| JP | 63-156508 | A | 29 June 1988 | (Family: none) | |
| JP | 53-090065 | A | 08 August 1978 | (Family: none) | |
| JP | 2004-057861 | A | 26 February 2004 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016194105 A

- JP 2014124539 A